# EUROPEAN PATENT APPLICATION

(11) **EP 1 601 191 A2**
(43) Date of publication of application: **30.11.2005**
(21) Application number: 05251034.4
(22) Date of filing: 23.02.2005
(51) Int. Cl.: H04N 5/238, H04N 5/235, H04N 5/225

(54) **Digital shutter**

(30) Priority: 28.05.2004 US 856270
(71) Applicant: OmniVision Technologies, Inc., Sunnyvale, California 94089 (US)
(72) Inventor: Rosdahl, Per, San Francisco, California 94123 (US); He, Xinping, San Jose, California 95148 (US)
(74) Representative: Hackney, Nigel John

(57) **Abstract**

A method and apparatus for a digital shutter is provided. In one embodiment, the invention is an apparatus. The apparatus includes an array of digital image sensor elements. The apparatus also includes a digital shutter coupled to the array of digital image sensor elements. In an alternate embodiment, the invention is a method. The method includes exposing an array of digital image sensors to an incoming image. The method further includes transforming a digital shutter to a non-transmissive state. The digital shutter is interposed between the array of digital image sensors and a source of the incoming image. In yet another embodiment, the invention is an apparatus. The apparatus includes means for sensing an incoming image. The apparatus also includes means for digitally blocking light from a source of the incoming image.

## Description

The invention generally relates to cameras and more specifically relates to shutters for digital cameras.

Cameras have used shutters to limit exposure times since the dawn of photography. However, shutter speeds and construction have been designed for application to chemically developed films. For such films, exposure times and effects such as color saturation, light levels, contrast and other visual details have been observed and experimented with by photographers for over a century.

Digital photography brings with it many different challenges. Technology for capturing digital images attempts to produce the same result as chemically developed films, but it uses different methods to achieve these results. Speeds and timing from the experimentations of photographers with chemically developed film may not have any relationship to requirements for good digital photography.

In particular, assuring that a digital photo is exposed properly, without having the image washed out or otherwise lacking in contrast, may be a desirable result. For exposure to digital elements which integrate image information, this may make a shutter compatible with digital or electronic action useful. Preferably, such a shutter would also be compatible with the size and packaging of a digital camera, and may advantageously be designed into manufacture of the digital elements themselves.

A method and apparatus for a digital shutter is provided. In one embodiment, the invention is an apparatus. The present invention may be understood with reference to various embodiments illustrated as methods, apparatuses, and systems for example. The apparatus includes an array of digital image sensor elements. The apparatus also includes a digital shutter coupled to the array of digital image sensor elements. The apparatus may further include a processor.

The apparatus may also further include a bus coupled to the processor and coupled to the array of digital image sensor elements and coupled to the digital shutter. The apparatus may also include a memory coupled to the bus. The apparatus may further include a display coupled to the bus. Moreover, in the apparatus, the digital shutter may have an iris format. Also, in the apparatus, the digital shutter may have a grid format. Additionally, in the apparatus, the digital shutter may include an array of digitally controlled elements having transmissive and non-transmissive states. The digitally controlled elements may include liquid crystal.

The apparatus may further include a mechanical shutter coupled to the digital shutter. The apparatus may also include an auxiliary digital shutter coupled to the digital shutter. Moreover, in the apparatus, the digital shutter may be integrated with the array of digitally controlled elements as a single component. Additionally, in the apparatus, the digital shutter may be a separate component from the array of digitally controlled elements.

In an alternate embodiment, the invention is a digital camera. The digital camera includes an array of digital image sensor elements. The digital camera also includes a digital shutter coupled to the array of digital image sensor elements. The digital camera further includes a processor, a memory, and a display. Additionally, the camera includes a bus coupled to the processor, the array of digital image sensor elements, the digital shutter, the memory and the display. In the digital camera the digital shutter may include an array of digitally controlled elements having transmissive and non-transmissive states. Also, the camera may include a mechanical shutter coupled to the digital shutter. Additionally, in the digital camera, the digital shutter may be integrated with the array of digitally controlled elements as a single component. Similarly, in the digital camera, the digital shutter may be a separate component from the array of digitally controlled elements.

In another alternate embodiment, the invention is a method. The method includes exposing an array of digital image sensors to an incoming image. The method further includes transforming a digital shutter to a non-transmissive state. The digital shutter is interposed between the array of digital image sensors and a source of the incoming image. The method may further include capturing a representation of the incoming image within the array of digital image sensors. The method may also include transferring the representation of the incoming image to a memory. The method may further include transferring the representation of the incoming image within the memory from a short-term portion of the memory to a long-term portion of the memory. Moreover, the method may include reading the representation of the incoming image from the array of digital sensors. Additionally, the method may include transforming a mechanical shutter from a transmissive to a non-transmissive state, with the mechanical shutter interposed between the source of the incoming image and the array of digital image sensors. Moreover, the method may include sighting the source of the incoming image within a viewfinder. In the method, the digital shutter and the array of digital image sensors may be integrated into a single component. Similarly, in the method, the digital shutter may be a first component and the array of digital image sensors may be a second component, with the first component separate from the second component.

In yet another alternate embodiment, the invention is a method of operating a digital camera. The method includes sighting the source of the incoming image within a viewfinder of the digital camera. The method also includes exposing an array of digital image sensors to an incoming image. The method further includes capturing a representation of the incoming image within the array of digital image sensors. The method also includes transforming a digital shutter to a non-transmissive state. The digital shutter is interposed between the array of digital image sensors and a source of the incoming image. The method also includes reading the representation of the incoming image from the array of digital sensors. The method further includes transferring the representation of the incoming image to a memory of the digital camera.

In still another embodiment, the invention is an apparatus. The apparatus includes means for sensing an incoming image. The apparatus also includes means for digitally blocking light from a source of the incoming image. The apparatus may further include means for capturing a representation of the incoming image within the means for sensing. The apparatus may also include means for storing the representation of the incoming image. The apparatus may further include means for viewing the incoming image.

Aspects of the present invention are set out in the attached claims.

### BRIEF DESCRIPTION OF THE DRAWINGS

The drawings are illustrative and exemplary of the present invention, and thus should be understood as to not be limiting on the invention.
Fig. 1 illustrates an embodiment of an array of pixels which may be used as part of a digital shutter.
Fig. 2 illustrates an embodiment of an iris which may be used as part of a digital shutter.
Fig. 3 illustrates an embodiment of a multi-layer digital shutter overlaying a digital image sensor.
Fig. 4 illustrates an embodiment of a shutter incorporating both mechanical and digital elements.
Fig. 5 illustrates an embodiment of a digital camera.
Fig. 6 illustrates an embodiment of a method of operating a digital camera.
Fig. 7 illustrates an alternate embodiment of a digital camera.

### DETAILED DESCRIPTION

A method and apparatus for a digital shutter is provided. A digital shutter may be incorporated as part of a digital camera, either by attachment of separately manufactured digital sensors and digital shutters, or by manufacture of a combined sensor and shutter array. The digital shutter may be formed using electrically controlled material which is alternatively either transmissive or non-transmissive. Non-transmissive material may be either absorptive or reflective for example. In particular, material such as liquid-crystal which has light transmission properties responsive to electrical fields may be used to provide a shutter, for example.

The present invention may be understood with reference to various embodiments illustrated as methods, apparatuses, and systems for example. In one embodiment, the invention is an apparatus. The apparatus includes an array of digital image sensor elements. The apparatus also includes a digital shutter coupled to the array of digital image sensor elements. The apparatus may further include a processor.

The apparatus may also further include a bus coupled to the processor and coupled to the array of digital image sensor elements and coupled to the digital shutter. The apparatus may also include a memory coupled to the bus. The apparatus may further include a display coupled to the bus. Moreover, in the apparatus, the digital shutter may have an iris format. Also, in the apparatus, the digital shutter may have a grid format. Additionally, in the apparatus, the digital shutter may include an array of digitally controlled elements having transmissive and non-transmissive states. The digitally controlled elements may include liquid crystal.

The apparatus may further include a mechanical shutter coupled to the digital shutter. The apparatus may also include an auxiliary digital shutter coupled to the digital shutter. Moreover, in the apparatus, the digital shutter may be integrated with the array of digitally controlled elements as a single component. Additionally, in the apparatus, the digital shutter may be a separate component from the array of digitally controlled elements.

In an alternate embodiment, the invention is a digital camera. The digital camera includes an array of digital image sensor elements. The digital camera also includes a digital shutter coupled to the array of digital image sensor elements. The digital camera further includes a processor, a memory, and a display. Additionally, the camera includes a bus coupled to the processor, the array of digital image sensor elements, the digital shutter, the memory and the display. In the digital camera the digital shutter may include an array of digitally controlled elements having transmissive and non-transmissive states. Also, the camera may include a mechanical shutter coupled to the digital shutter. Additionally, in the digital camera, the digital shutter may be integrated with the array of digitally controlled elements as a single component. Similarly, in the digital camera, the digital shutter may be a separate component from the array of digitally controlled elements.

In another alternate embodiment, the invention is a method. The method includes exposing an array of digital image sensors to an incoming image. The method further includes transforming a digital shutter to a non-transmissive state. The digital shutter is interposed between the array of digital image sensors and a source of the incoming image. The method may further include capturing a representation of the incoming image within the array of digital image sensors. The method may also include transferring the representation of the incoming image to a memory. The method may further include transferring the representation of the incoming image within the memory from a short-term portion of the memory to a long-term portion of the memory. Moreover, the method may include reading the representation of the incoming image from the array of digital sensors. Additionally, the method may include transforming a mechanical shutter from a transmissive to a non-transmissive state, with the mechanical shutter interposed between the source of the incoming image and the array of digital image sensors. Moreover, the method may include sighting the source of the incoming image within a viewfinder. In the method, the digital shutter and the array of digital image sensors may be integrated into a single component. Similarly, in the method, the digital shutter may be a first component and the array of digital image sensors may be a second component, with the first component separate from the second component.

In yet another alternate embodiment, the invention is a method of operating a digital camera. The method includes sighting the source of the incoming image within a viewfinder of the digital camera. The method also includes exposing an array of digital image sensors to an incoming image. The method further includes capturing a representation of the incoming image within the array of digital image sensors. The method also includes transforming a digital shutter to a non-transmissive state. The digital shutter is interposed between the array of digital image sensors and a source of the incoming image. The method also includes reading the representation of the incoming image from the array of digital sensors. The method further includes transferring the representation of the incoming image to a memory of the digital camera.

In still another embodiment, the invention is an apparatus. The apparatus includes means for sensing an incoming image. The apparatus also includes means for digitally blocking light from a source of the incoming image. The apparatus may further include means for capturing a representation of the incoming image within the means for sensing. The apparatus may also include means for storing the representation of the incoming image. The apparatus may further include means for viewing the incoming image.

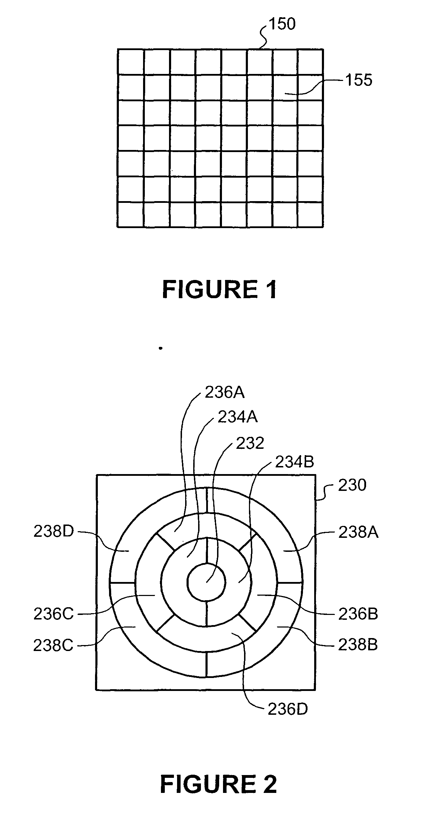

A shutter may be implemented in a variety of ways. Fig. 1 illustrates an embodiment of an array of pixels which may be used as part of a digital shutter. Array 150 is divided into essentially identical elements 155. Array 150 is composed of liquid crystal, with each element 155 being an individually controllable element, such as through a grid of electrodes (not shown). Preferably, each element 155 may be switched between transmissive and non-transmissive states, such as in response to a changing electrical field.

Moreover, the material of array 150 is necessarily material having a property of being switchable between transmissive and non-transmissive states at a granular level (such as for each element 155). Thus, the material need not be switchable in response to electric fields if some other switching mechanism is available. Similarly, the material need not be liquid crystal, as other materials will perform a similar function.

While the grid layout of Fig. 1 has some advantages, other layouts and formats with corresponding properties may be useful as well. Fig. 2 illustrates an embodiment of an iris which may be used as part of a digital shutter. Shutter 230 is again a liquid crystal or similar material. It is composed of segments which make up an iris pattern. However, each segment is a single switchable liquid crystal segment.

In one embodiment, the segments, either alone or in combination, make up concentric rings of an iris pattern. Thus, segments 238A, 238B, 238C and 238D are each liquid crystal segments which are individually controllable and collectively form an outer ring of the iris. Similarly, segments 236A, 236B, 236C and 236D each form a second ring of the iris collectively while individually forming controllable liquid crystal segments. For the third ring, segments 234A and 234B form a ring collectively, approximately half of which is in each segment. Finally, centerpiece 232 is another controllable liquid crystal segment which may be considered to form a fourth ring (with an inner diameter of zero).

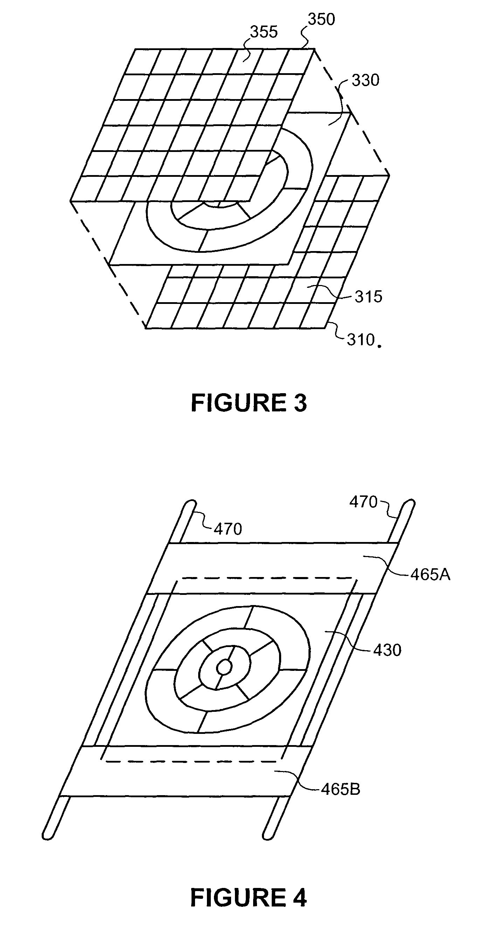

These two embodiments of Fig. 1 and Fig. 2 may be used separately, or collectively. Fig. 3 illustrates an embodiment of a multi-layer digital shutter overlaying a digital image sensor. Shutter array 350 is composed of a set of individually controllable liquid crystal segments 355, much as in the embodiment illustrated in Fig. 1.

Similarly, Shutter 330 is composed of an array of individually controllable liquid crystal segments arranged in the pattern of an iris. Pixel array 310 underlays the two shutters 330 and 350, and includes an array of individual image sensors 315.

Thus, one or both of shutters 330 and 350 may be used to cut off light to pixel array 310. Pixel array 310 may sense an image, and stop sensing in conjunction with cutoff by one of the shutters. Moreover, pixel array 310 may effectively act as a memory for a short period of time, as it may retain the last image formed before one or both of the shutters cut off light from a corresponding object. If each pixel 315 integrates light received over time, then the amount of time since light was received may be factored in to scale the value from such a pixel 315.

Additionally, individual elements 355 of the shutter 350 may be turned on or shut off to control light falling on portions of array 310, rather than completely closing shutter 350. Similarly, individual portions of rings or individual rings of shutter 330 may be opened/closed (to transmission) to control exposure. Moreover, patterns of exposure may be used, such that shutter array 350 may act as a shutter that slides from any side or diagonally for example, by programming individual elements 355 to turn off in sequence. Similarly, shutter 330 may close in the manner of an iris by programming rings to turn off in sequence.

Just as multiple digital shutters may be combined, a digital shutter may be combined with a mechanical shutter. Fig. 4 illustrates an embodiment of a shutter incorporating both mechanical and digital elements. Rails 470 support shutter sections 465A and 465B, which may be actuated (moved) using springs, gears, or other mechanical means (not shown). Thus, the combination of rails 470 and shutter sections 465A and 465B provide a mechanical shutter. Aligned with the mechanical shutter is digital shutter 430, here illustrated as an iris pattern shutter, similar to the shutter of Fig. 2. This alignment allows for an underlying digital image sensor array to be exposed to light through both a digital and a mechanical shutter. Such redundancy may be advantageous for a variety of reasons. For example, leakage from one shutter may be counteracted by blockage from the other shutter. Additionally, one shutter may operate faster than the other shutter. Thus, the two shutters may be used together in conjunction with a digital image sensor in the process of taking pictures digitally.

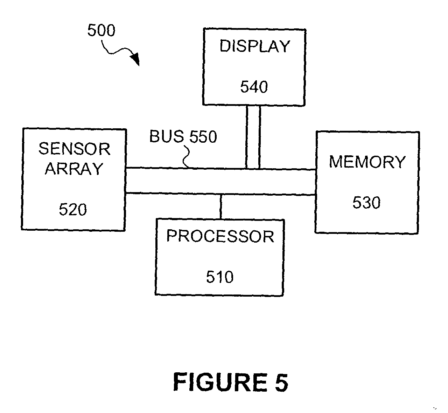

Putting the system together in the form of a digital camera allows for functionality of the digital shutter to aid in creation of digital photographs. Fig. 5 illustrates an embodiment of a digital camera. Camera 500 includes a processor, memory, display, bus, and digital image sensor. Processor 510 is coupled to bus 550, along with sensor array 520, memory 530 and display 540. Processor 510 controls bus 550 and directly or indirectly controls sensor array 520, memory 530 and display 540. Bus 550 allows for transfers of data between the components of camera 500.

Sensor array 520 includes a digital image sensor array and a digital shutter. The digital shutter of sensor array 520 controls light exposure to the digital image sensor array of sensor array 520. In some embodiments, sensor array 520 is formed of a single integrated component including both the digital image sensor array and the digital shutter. Alternatively, the shutter and image sensor arrays may be formed separately. However, the shutter and image sensor arrays are preferably operated cooperatively, too insure that the sensor array captures images as desired.

Generally, sensor array 520 captures images, and then processor 510 supervises transfer of data from sensor array 520 to memory 530 for storage and later retrieval.

In some digital camera embodiments, display 540 generally either displays an image as presently detected by sensor array 520 or an image as captured by sensor array 520 and stored in memory 530. Thus, display 540 may be used both as a viewfinder and as a previewer of digital images as stored in memory 530. Memory 530 may include short-term and long-term memory, such as RAM and EEPROM memory as may be organized into operating memory and FLASH card memory for example.

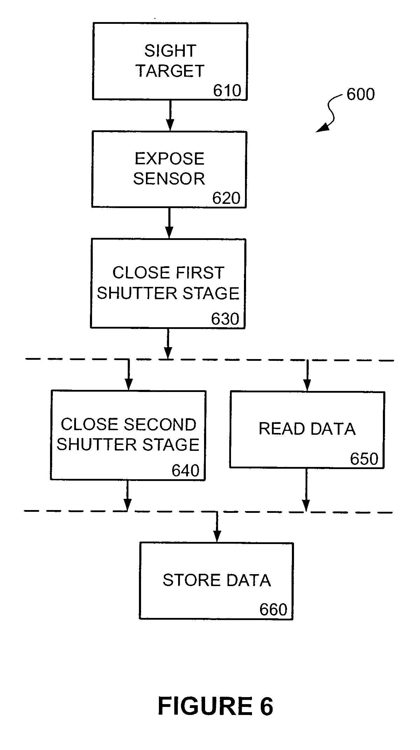

Camera 500 and other digital cameras may be operated in a variety of manners. Fig. 6 illustrates an embodiment of a method of operating a digital camera. The method 600 is composed of a set of modules, which may be implemented as steps in a process, process modules, or as apparatus modules performing acts corresponding to the described modules. At module 610, a target object or image is sighted, such as through a viewfinder. At module 620, the sensor array of the camera is exposed to the target object or image, allowing for detection of an image of the target within the sensor array. At module 630, a first shutter stage is closed, such as closing a mechanical shutter exterior to a sensor array. At module 640, a second shutter stage is triggered, such as a digital shutter stage being controlled to stop transmission of light to an adjacent or integrated sensor array. In an essentially parallel or concurrent process, at module 650, data from the digital image sensor portion of a sensor array is read, such as during a transfer of data from a digital image sensor array to a memory module. At module 660, data read from the sensor array is stored, such as in a memory. Storage may relate to transfer from short-term memory to long-term memory, or to reading data from a sensor array and writing that data to memory.

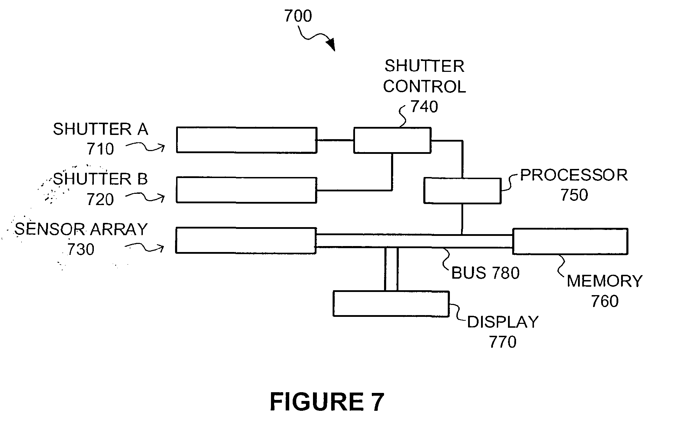

Just as the method of Fig. 6 may be used with the embodiment illustrated in Fig. 5, similar methods may be used with other embodiments. Fig. 7 illustrates an alternate embodiment of a digital camera. Camera 700 includes a processor, image sensor, shutter controller, first and second shutters, a bus, memory, and a display.

Processor 750 is coupled to bus 780 and to shutter control 740. Shutter control 740 is coupled to shutter A 710 and shutter B 720, each of which are aligned between sensor array 730 and any target image or object. Shutter control 740 controls shutter A 710 and shutter B 720, triggering each shutter to be either transmissive or non-transmissive. Shutter control 740 is, in turn, controlled by processor 750.

Processor 750 also controls memory 760, sensor array 730 and display 770, each through bus 780. Sensor array 730 includes an array of digital image sensors, each of which may capture a pixel of an image when shutter A 710 and shutter B 720 are both in a transmissive mode or state. Memory 760 stores the values of sensor array 730, either in temporary storage (such as RAM for example) or in persistent storage (such as FLASH EEPROM for example). Data from sensor array 730 may be transferred along bus 780 to either memory 760 for storage or to display 770 for display (such as for viewfinding applications, for example). Display 770 may incorporate a frame buffer, or may use a portion of memory 760 as a frame buffer for example.

Processor 750 may also be coupled to a user interface (not shown), such as a shooting button and other controls allowing for settings. Moreover, processor 750 may use display 770 as part of the user interface, such as by showing settings or menus on display 770 for example. Processor 750 may thus be expected to control all operations of camera 700.

Shutter A 710 and shutter B 720 may be identical or complementary forms of shutters. For example, shutter A 710 may be a mechanical shutter and shutter B 720 may be a digital shutter in the form of either an iris or a grid (array) of digitally controlled elements in some embodiments. In alternative embodiments, shutter A 710 and shutter B 720 may both be digital shutters, either identical or variants, such as a combination of a grid and an iris, each with digitally controlled elements, for example.

From the foregoing, it will be appreciated that specific embodiments of the invention have been described herein for purposes of illustration, but that various modifications may be made without deviating from the spirit and scope of the invention. In some instances, reference has been made to characteristics likely to be present in various or some embodiments, but these characteristics are also not necessarily limiting on the spirit and scope of the invention. In the illustrations and description, structures have been provided which may be formed or assembled in other ways within the spirit and scope of the invention. Similarly, methods have been illustrated and described as linear processes, but such methods may have operations reordered or implemented in parallel within the spirit and scope of the invention. Accordingly, the invention is not limited except as by the appended claims.

## Claims

1. An apparatus, comprising:
an array of digital image sensor elements; and
a digital shutter coupled to the array of digital image sensor elements.

2. The apparatus of claim 1, further comprising:
a processor.

3. The apparatus of claim 2, further comprising:
a bus coupled to the processor and coupled to the array of digital image sensor elements and coupled to the digital shutter.

4. The apparatus of claim 3, further comprising:
a memory coupled to the bus.

5. The apparatus of claim 4, further comprising:
a display coupled to the bus.

6. The apparatus of any of the above claims, wherein:
the digital shutter has an iris format.

7. The apparatus of any of the above claims, wherein:
the digital shutter has a grid format.

8. The apparatus of any of the above claims, wherein:
the digital shutter includes an array of digitally controlled elements having transmissive and non-transmissive states.

9. The apparatus of claim 8, wherein:
the digital shutter has an iris format.

10. The apparatus of claim 8, wherein:
the digital shutter has a grid format.

11. The apparatus of claim 8, wherein:
the digitally controlled elements include liquid crystal.

12. The apparatus of any of the above claims , further comprising:
a mechanical shutter coupled to the digital shutter.

13. The apparatus of any of the above claims, further comprising:
an auxiliary digital shutter coupled to the digital shutter.

14. The apparatus of any of the above claims, wherein:
the digital shutter is integrated with the array of digitally controlled elements as a single component.

15. The apparatus of claims 1 to 13, wherein:
the digital shutter is a separate component from the array of digitally controlled elements.

16. The apparatus of claim 1, further comprising:
a processor;
a bus coupled to the processor and coupled to the array of digital image sensor elements and coupled to the digital shutter;
a memory coupled to the bus;
a display coupled to the bus; and
wherein the digital shutter includes an array of digitally controlled elements having transmissive and non-transmissive states.

17. The apparatus of claim 16, further comprising:
a mechanical shutter coupled to the digital shutter.

18. The apparatus of claim 16, wherein:
the digital shutter has an iris format.

19. The apparatus of claim 16, wherein:
the digital shutter has a grid format.

20. The apparatus of claim 16, wherein:
the digital shutter is integrated with the array of digitally controlled elements as a single component.

21. The apparatus of claim 16, wherein:
the digital shutter a separate component from the array of digitally controlled elements.

22. A digital camera, including apparatus according to any of the above claims.

23. A method, comprising:
exposing an array of digital image sensors to an incoming image; and
transforming a digital shutter to a non-transmissive state, the digital shutter interposed between the array of digital image sensors and a source of the incoming image.

24. The method of claim 23, further comprising:
capturing a representation of the incoming image within the array of digital image sensors.

25. The method of claim 24, further comprising:
transferring the representation of the incoming image to a memory.

26. The method of claim 25, further comprising:
transferring the representation of the incoming image within the memory from a short-term portion of the memory to a long-term portion of the memory.

27. The method of claim 24, further comprising:
reading the representation of the incoming image from the array of digital sensors.

28. The method of claim 23, further comprising:
transforming a mechanical shutter from a transmissive to a non-transmissive state, the mechanical shutter interposed between the source of the incoming image and the array of digital image sensors.

29. The method of claim 23, further comprising:
sighting the source of the incoming image within a viewfinder.

30. The method of claim 23, further comprising:
transforming a mechanical shutter from a transmissive to a non-transmissive state, the mechanical shutter interposed between a source of the incoming image and the array of digital image sensors; and
wherein the mechanical shutter is interposed between the source of the incoming image and the digital shutter.

31. The method of claim 23, wherein:
the digital shutter and the array of digital image sensors are integrated into a single component.

32. The method of claim 23, wherein:
the digital shutter is a first component and the array of digital image sensors are a second component, the first component separate from the second component.

33. The method of claim 23, further comprising:
sighting the source of the incoming image within a viewfinder;
capturing a representation of the incoming image within the array of digital image sensors;
reading the representation of the incoming image from the array of digital sensors; and
transferring the representation of the incoming image to a memory.

34. The method of claim 33, further comprising:
transferring the representation of the incoming image within the memory from a short-term portion of the memory to a long-term portion of the memory.

35. The method of claim 33, further comprising:
transforming a mechanical shutter from a transmissive to a non-transmissive state, the mechanical shutter interposed between the source of the incoming image and the array of digital image sensors.

36. A method of operating a digital camera, including the method steps of any of Claims 23-35.

37. An apparatus, comprising:
means for sensing an incoming image; and
means for digitally blocking light from a source of the incoming image.

38. The apparatus of claim 37, further comprising:
means for capturing a representation of the incoming image within the means for sensing.

39. The apparatus of claim 37, further comprising:
means for storing the representation of the incoming image.

40. The apparatus of claim 37, further comprising:
means for viewing the incoming image.
